# EUROPÄISCHE PATENTSCHRIFT

(11) **EP 1 713 974 B1**
(45) Veröffentlichungstag und Bekanntmachung des Hinweises auf die Patenterteilung: **26.03.2008**
(21) Anmeldenummer: 05701579.4
(22) Anmeldetag: 21.01.2005
(51) Int. Cl.: D21G 1/02

(54) **VERFAHREN ZUR BEHEIZUNG EINER WALZE SOWIE BEHEIZBARE WALZE**
METHOD FOR HEATING A ROLLER, AND HEATABLE ROLLER
PROCEDE POUR CHAUFFER UN ROULEAU, ET ROULEAU CHAUFFABLE

(30) Priorität: 10.02.2004 DE 102004006514
(43) Veröffentlichungstag der Anmeldung: 25.10.2006
(73) Patentinhaber: Voith Patent GmbH, 89522 Heidenheim (DE)
(72) Erfinder: DÖLING, Fabian, 40668 Meerbusch (DE)
(86) Internationale Anmeldenummer: PCT/EP2005/050253
(87) Internationale Veröffentlichungsnummer: WO 2005/078190

(56) Entgegenhaltungen:
- EP-A- 0 285 886
- DE-A1- 19 726 645
- US-A- 3 700 217

## Beschreibung

Die Erfindung betrifft ein Verfahren zur Beheizung einer der Herstellung und/oder Veredelung einer Materialbahn, insbesondere Papier- oder Kartonbahn, dienenden Walze, wobei die dafür erforderliche warme zumindest teilweise in der walze erzeugt wird. Sie betrifft ferner eine beheizbare Walze gemäß dem Oberbegriff des Anspruchs 26.

Derartige Verfahren bzw. Walzen sind beispielsweise aus den Dokumenten EP-A-0 285 886 und US-A-3 700 217 bekannt.

Bei den bisher üblichen im Bereich der Papierherstellung und/oder -veredelung eingesetzten beheizbaren Walzen wird Wärme über ein Heizmedium in die Walze transportiert. Die zum Beheizen der Walze erforderliche Wärme wird also indirekt übertragen. Dabei wird das betreffende Medium, bei dem es sich bisher in der Regel um Öl oder Wasser handelte, mittels eines externen Heizaggregates erhitzt. In der Regel war ein elektrischer Betrieb, eine Befeuerung mit Gas oder ein Betrieb mit Dampf vorgesehen.

Der Erfindung liegt die Aufgabe zugrunde, ein verbessertes Verfahren sowie eine verbesserte beheizbare Walze der eingangs genannten Art zu schaffen. Dabei soll insbesondere auch der Einsatz von regenerativen Brennstoffen möglich sein.

Bezüglich des Verfahrens wird diese Aufgabe erfindungsgemäß dadurch gelöst, dass die zum Beheizen der Walze erforderliche Wärme zumindest teilweise erzeugt wird, indem in der Walze zumindest bereichsweise für eine katalytische Verbrennung eines Brennstoffes mit Luft bzw. Sauerstoff gesorgt wird.

Die Wärme wird also dort erzeugt, wo sie benötigt wird. Zudem können nunmehr regenerative Energien zur Erzeugung der erforderlichen Wärme eingesetzt werden. Dabei kann die Walze insbesondere nach Art eines katalytischen Brenners betrieben werden. Ein katalytischer Brenner ist beispielsweise aus dem Dokument DE19726645A1 bekannt.

Gemäß einer bevorzugten praktischen Ausgestaltung des erfindungsgemäßen Verfahrens wird die Wärme zumindest teilweise an mit einem Katalysator beschichteten inneren Wärmeübertragungsflächen der Walze erzeugt. Die Wärme kann zumindest teilweise jedoch auch in wenigstens einem mit einem Katalysatorträger ausgefüllten oder mit einer katalytischen Fläche versehenen inneren Raum der Walze erzeugt werden.

Als Brennstoff wird bevorzugt ein Brenngas verwendet.

Gemäß einer vorteilhaften praktischen Ausgestaltung des erfindungsgemäßen Verfahrens wird an dem Katalysator für eine exotherme Reaktion mit einem unter einem einstellbaren bzw. eingestellten Mischungsverhältnis zugeführten Gemisch aus Brenngas und Luft gesorgt.

Gemäß einer weiteren vorteilhaften Ausgestaltung wird das Gemisch aus Brenngas und Luft peripheren Bohrungen der Walze zugeführt und in diesen peripheren Bohrungen für eine exotherme Reaktion gesorgt. Die peripheren Bohrungen können sich allgemein parallel zur Walzenachse erstrecken. Das Heizgas von den peripheren Bohrungen wird bevorzugt über radiale Kanäle einem von Kanälen durchzogenen Ringbereich nahe der Walzenoberfläche zugeführt. Der betreffende Ringbereich kann also insbesondere im Walzenmantel vorgesehen sein.

Das Gemisch aus Brenngas und Luft wird der Walze zweckmäßigerweise über wenigstens eine Dreheinführung zugeführt.

Die exotherme Reaktion kann jedoch auch in einem von Kanälen durchzogenen Ringbereich nahe der Walzenoberfläche erfolgen. Diesem von Kanälen durchzogenen Ringbereich kann beispielsweise über periphere Bohrungen der Walze sowie von diesen ausgehende radiale Kanäle Brenngas und z.B. über eine zentrale Walzenbohrung sowie von dieser ausgehende radiale Kanäle Luft zugeführt wird. Es ist jedoch auch die Zufuhr eines Gemisches aus Brenngas und Luft denkbar.

Der entscheidende Vorteil einer katalytischen Reaktion besteht darin, dass die Reaktion lokal an der katalytisch beschichteten Oberfläche (Kanäle im Ringbereich) stattfindet. Wenn Zuführungen (periphere Bohrungen, radiale Bohrungen und zentrale Walzenbohrungen) nicht beschichtet sind, wird ein Gemisch aus Brenngas und Luft hier nicht reagieren. Nur die Kanäle im Innenbereich sind beschichtet und nur hier findet eine Umsetzung des Reaktionsgemisches unter Wärmeabgabe statt.

Eine Mischung von Luft und Brenngas bereits vor Zuführung in die Walze ist deshalb nicht nachteilig. Eine Mischung innerhalb der Walze erfordert allerdings zusätzliche Zuführungen, Kanäle usw. und wäre aufwändiger. Grundsätzlich ist jedoch auch eine solche Zufuhr eines Gemisches denkbar.

Auch in diesem Fall können also wieder insbesondere sich parallel zur Walzenachse erstreckende periphere Bohrungen vorgesehen sein. Die exotherme Reaktion erfolgt hier jedoch nicht in diesen peripheren Bohrungen, sondern in dem von Kanälen durchzogenen Ringbereich nahe der Walzenoberfläche. Die peripheren Bohrungen können beispielsweise der Zufuhr des Brenngases dienen, während Luft z.B. über die zentrale Walzenbohrung zugeführt wird. Grundsätzlich ist jedoch auch eine solche Ausführung denkbar, bei der über die peripheren Bohrungen bereits ein Gemisch aus Brenngas und Luft zugeführt wird.

Das Brenngas bzw. die Luft wird der Walze zweckmäßigerweise wieder über wenigstens eine Dreheinführung zugeführt.

Gemäß einer bevorzugten praktischen Ausgestaltung des erfindungsgemäßen Verfahrens ist die Walze in Richtung der Walzenachse betrachtet zonenweise beheizbar, wobei die verschiedenen Zonen zumindest teilweise unabhängig voneinander beheizbar sind. Die betreffenden Zonen können also einzeln oder gruppenweise angesteuert werden.

Bei einer Walze mit einem um einen drehfesten Kern umlaufenden Mantel kann die exotherme Reaktion insbesondere auch im Bereich der Oberfläche des Walzenkerns oder in einem von Kanälen durchzogenen Ringbereich des drehbaren Walzenmantels erfolgen. Eine zweckmäßige Alternative für eine exotherme Reaktion im Bereich der Oberfläche des Walzenkerns ist also wie zuvor bereits erwähnt die Reaktion im von Kanälen durchzogenen Ringbereich des drehbaren Walzenmantels.

Dabei ist beispielsweise eine solche Ausführung denkbar, bei der der stehende Walzenkern in eine Luftzuführung und eine Abgasabführung zweigeteilt ist. Zwischen dem stehenden Walzenkern und dem drehbaren Walzenmantel können Dichtungen vorgesehen sein, die ringförmige Bereiche zwischen den beiden Körpern einschließen. Über Bohrungen in dem Walzenkern könne jeweils abwechselnd Verbindungen zwischen der Luftzuleitung bzw. der Abgasabführung und den ringförmigen Bereichen hergestellt werden. Radiale Bohrungen in dem Walzenmantel können der Verbindung der katalytisch beschichteten Kanäle mit den ringförmigen Bereichen dienen.

Bevorzugt wird die Walze über Dichtungen und mehrere in die Kanalstrukturen mündende Zuführkanäle oder Bohrungen für Brenngas und Luft bzw. ein Gemisch aus Brenngas und Luft in verschiedene, zumindest teilweise unabhängig voneinander beheizbare axiale Zonen unterteilt. In die Zuführkanäle bzw. Bohrungen können das Brenngas zuführende Leitungen münden. Überdies können diese Zuführkanäle bzw. Bohrungen mit einer Luft führenden zentralen Bohrung des Walzenkerns kommunizieren.

Die Reaktions- bzw. Walzentemperatur wird vorteilhafterweise über das Massenstromverhältnis Brennstoff/Luft (Stöchiometrie) eingestellt.

In bestimmten Fällen kann eine überstöchiometrische Verbrennung bzw. eine Verbrennung mit einem Überschuss an Sauerstoff zweckmäßig sein.

Als Brennstoff kann insbesondere Wasserstoff eingesetzt werden. Von Vorteil ist insbesondere auch die Verwendung von Reformat bzw. eines aus Erdgas gewonnenen H₂-reichen Gases als Brennstoff.

Als Katalysator kann insbesondere wenigstens ein Edelmetall wie insbesondere Platin, Palladium, Rhodium und/oder dergleichen verwendet werden.

Vorteilhafterweise wird der Brenngasmassenstrom geregelt, so dass insbesondere auch eine Volumenstrommessung und ein entsprechendes Stellventil vorgesehen sein kann.

Von Vorteil ist insbesondere auch, wenn vorzugsweise über einen Brenngassensor und ein entsprechendes Stellventil die Brenngaskonzentration in der Luft geregelt wird.

Zweckmäßigerweise wird auch die Walzentemperatur geregelt.

Eine jeweilige Regelung kann insbesondere auch wieder zonenweise erfolgen, wobei die Zonen einzeln oder gruppenweise geregelt werden können.

Bezüglich der beheizbaren Walze wird die weiter oben angegebene Aufgabe erfindungsgemäß dadurch gelöst, dass die zum Beheizen erforderliche Wärme zumindest teilweise durch katalytische Verbrennung eines Brennstoffes mit Luft bzw. Sauerstoff in der Walze erzeugt ist.

Bevorzugte Ausführungsformen der beheizbaren Walze sind in den Unteransprüchen angegeben.

Die bei der betreffenden Ausführungsform auf der Oberfläche des Walzenkerns vorgesehenen Kanalstrukturen können zumindest teilweise durch Ätzen oder Fräsen erzeugt werden.

Die Beschichtung mit dem Katalysator kann beispielsweise durch eine Spül-, Tauch- oder Sprühbeschichtung erzeugt werden.

Der Walzenmantel wird vorzugsweise auf den Walzenkern aufgeschrumpft und/oder mit diesem verlötet.

Die Erfindung wird im folgenden anhand von Ausführungsbeispielen unter Bezugnahme auf die Zeichnung näher erläutert; in dieser zeigen:
- Figur 1: eine schematische, teilweise geschnittene Darstellung einer mit Brenngas versorgten, nach Art eines katalytischen Brenners betriebenen beheizbaren Walze,
- Figur 2: eine schematische Querschnittsdarstellung einer Ausführungsform der beheizbaren Walze, bei der das Gemisch aus Brenngas und Luft peripheren Bohrungen der Walze zugeführt wird und die exotherme Reaktion in diesen peripheren Bohrungen erfolgt,
- Figur 3: eine Draufsicht eines Teils der beheizbaren Walze gemäß Figur 3, in der die nahe der Walzenoberfläche vorgesehenen Kanäle zu erkennen sind, denen das Heizgas von den peripheren Bohrungen zugeführt wird,
- Figur 4: eine schematische Querschnittsdarstellung einer weiteren Ausführungsform der beheizbaren Walze, bei der die exotherme Reaktion in einem von Kanälen durchzogenen Ringbereich nahe der Walzenoberfläche erfolgt,
- Figur 5: eine schematische perspektivische Darstellung des Kerns einer weiteren Ausführungsform der beheizbaren Walze, bei der die exotherme Reaktion im Bereich der Oberfläche des Walzenkerns erfolgt,
- Figur 6: eine schematische perspektivische Darstellung einer Ausführungsform der beheizbaren Walze mit einem drehfesten Kern gemäß Figur 5, wobei auch der um diesen Kern umlaufende Mantel mit dargestellt ist, und
- Figur 7: eine schematische geschnittene Teildarstellung einer weitern Ausführungsform der beheizbaren Walze mit einem drehfesten Kern, wobei die exotherme Reaktion hier jedoch wieder in einem von Kanälen durchzogenen Ringbereich des drehbaren Walzenmantels erfolgt.

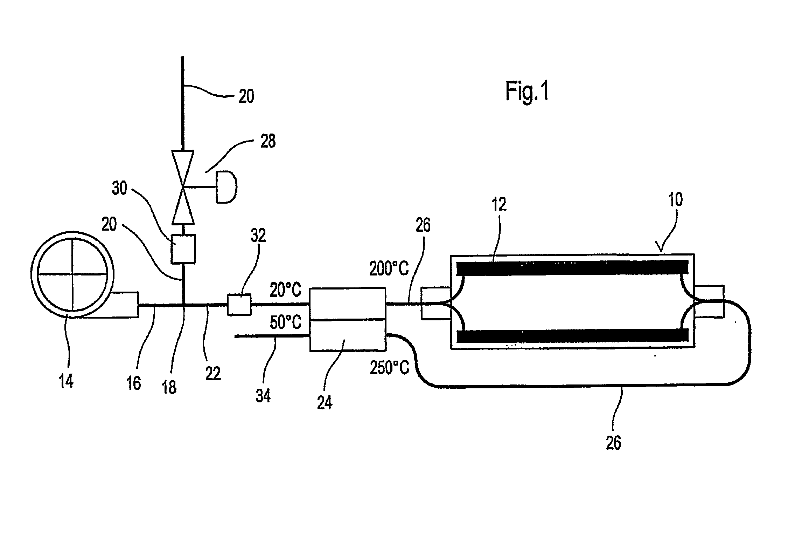

Figur 1 zeigt in schematischer, teilweise geschnittener Darstellung eine mit Brenngas bzw. einem Gemisch aus Brenngas und Luft versorgte, nach Art eines katalytischen Brenners betriebene beheizbare Walze 10. Dabei kann es sich insbesondere um eine Walze 10 zur Herstellung und/oder Veredelung einer Materialbahn, insbesondere Papier- oder Kartonbahn, handeln.

Die zum Beheizen der Walze 10 erforderliche Wärme wird zumindest teilweise durch katalytische Verbrennung eines Brennstoffes mit Luft bzw. Sauerstoff in der Walze 10 erzeugt. Die Walze 10 ist also nach Art eines katalytischen Brenners ausgeführt.

Dabei weist die Walze 10 mit einem Katalysator beschichtete Wärmeübertragungsflächen 12 auf, an denen die exotherme chemische Reaktion stattfindet. Alternativ oder zusätzlich kann die Walze auch wenigstens einen mit einem Katalysatorträger ausgefüllten oder mit einer katalytischen Fläche versehenen inneren Raum umfassen.

Als Brennstoff kann ein Brenngas, z.B. Wasserstoff oder dergleichen, vorgesehen sein.

Im vorliegenden Fall wird der beheizbaren Walze 10 für eine exotherme Reaktion an dem Katalysator ein Gemisch aus Brenngas und Luft zugeführt, dessen Mischungsverhältnis einstellbar ist.

Wie anhand der Figur 1 zu erkennen ist, wird die Luft über ein Luftgebläse 14 bereitgestellt und über einen Leitungsabschnitt 16 zunächst einer Mischstelle 18 zugeführt, der über einen weiteren Leitungsabschnitt 20 das Brenngas zugeführt wird, um dieses mit der Luft zu vermischen.

Das Gemisch aus Brenngas und Luft wird anschließend über einen Leitungsabschnitt 22 einem Wärmeübertrager 24 zugeführt, von dem aus das Gemisch über einen Leitungsabschnitt 26 den mit einem Katalysator beschichteten Wärmeübertragungsflächen 12 zugeführt wird und in dem das frisch zugeführte Gemisch über das über einen Leitungsabschnitt 26 von den Wärmeübertragungsflächen 12 der Walze 10 rückgeführte Abgas bzw. Abluft vorgewärmt wird.

In dem das Brenngas zuführenden Leitungsabschnitt 20 sind ein Stellventil 28 und eine Einrichtung 30 zur Volumenstrommessung vorgesehen.

In dem zwischen der Mischstelle 18 und dem Wärmeübertrager 24 vorgesehenen Leitungsabschnitt 22 ist ein Brenngassensor 32 angeordnet.

Über einen Leitungsabschnitt 34 wird das Abgas bzw. die Abluft aus dem Wärmeübertrager 24 herausgeführt.

Beim vorliegenden Ausführungsbeispiel wird das Gemisch aus Brenngas und Luft dem Wärmeübertrager 24 bei einer Temperatur von beispielsweise etwa 20 °C zugeführt. Im Wärmeübertrager 24 wird das Gemisch beispielsweise auf eine Temperatur von etwa 200 °C vorerwärmt. Das zum Wärmeübertrager 24 rückgeführte Abgas bzw. Abluft aus dem Bereich der Wärmeübertragungsflächen 12 der Walze 10 besitzt eine Temperatur von beispielsweise etwa 250 °C. Das aus dem Wärmeübertrager 24 herausgeführte Abgas bzw. Abluft besitzt eine Temperatur von beispielsweise etwa 50 °C.

Bei dem über den Leitungsabschnitt 20 zugeführten Brenngas kann es sich insbesondere um Wasserstoff oder beispielsweise auch um ein Reformat bzw. ein aus Erdgas gewonnenes H₂-reiches Gas handeln.

Die Reaktions- bzw. Walzentemperatur kann über das Massenstromverhältnis Brennstoff/Luft (Stöchiometrie) eingestellt werden. Grundsätzlich kann auch eine überstöchiometrische Verbrennung bzw. eine Verbrennung mit einem Überschuss an Sauerstoff erfolgen.

Bei dem Katalysator kann es sich beispielsweise um ein Edelmetall wie insbesondere Platin, Palladium, Rhodium und/oder dergleichen handeln.

Über das Stellventil und die Einrichtung 30 zur Volumenstrommessung ist eine Regelung des Brenngasmassenstroms möglich.

Über den Brenngassensor 32 und beispielsweise das Stellventil 38 kann die Brenngaskonzentration in der Luft geregelt werden.

Über ein entsprechendes Stellventil kann insbesondere auch die Walzentemperatur geregelt werden.

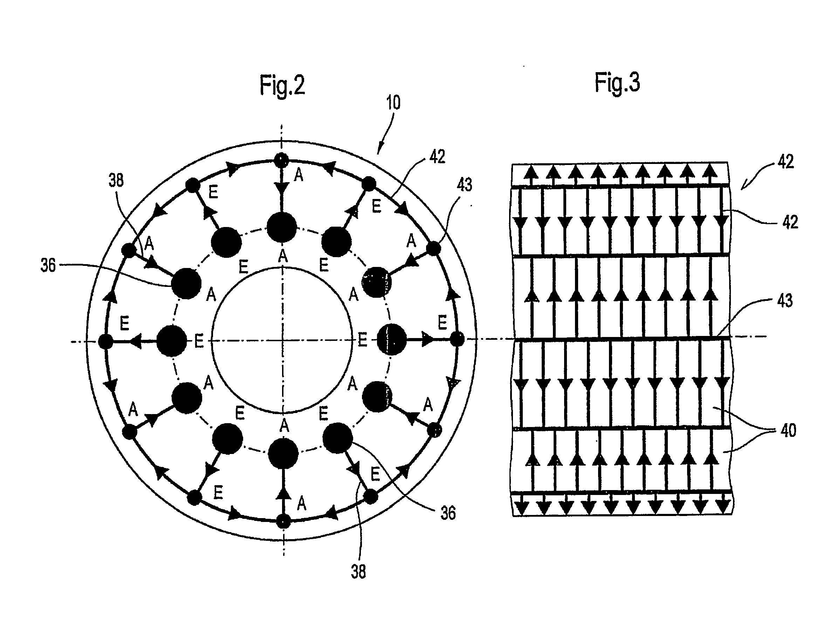

Figur 2 zeigt in schematischer Querschnittsdarstellung eine Ausführungsform der beheizbaren Walze 10, bei der das Gemisch aus Brenngas und Luft peripheren, allgemein parallel zur Walzenachse verlaufenden Bohrungen 36, E der Walze 10 zugeführt wird.

Das Heizgas von den peripheren Bohrungen 36, E wird über radiale Kanäle 38, E einem von Kanälen 40 durchzogenen Ringbereich 42 nahe der Walzenoberfläche zugeführt. Die exotherme Reaktion findet in diesen Kanälen 40 statt.

Im vorliegenden Fall sind beispielsweise zwölf periphere Bohrungen 36 vorgesehen, wobei das Gemisch aus Brenngas und Luft über sechs (36, E) dieser peripheren Bohrungen der Walze zugeführt wird. "E" steht hier also für "Eintritt".

Überdies sind zwölf radiale Bohrungen 38 vorgesehen. Dabei strömt das Gemisch aus Brenngas und Luft über sechs (38, E) dieser zwölf radialen Bohrungen in Richtung der Verteilerkanäle 43, E.

In einer Schnittebene der Walze befinden sich als zwölf Bohrungen, während in axialer Richtung mehrere Bohrungsebenen vorgesehen sind.

Über die Verteilerkanäle 43, E verteilt sich das Gasgemisch in axialer Richtung und strömt dann über die Kanäle 40 im Ringbereich 42 zu den Verteilerkanälen 43, A. Dabei steht "A" für "Austritt".

Die Kanäle 40 im Ringbereich 42 sind katalytisch beschichtet. Die exotherme Reaktion findet also hier statt.

Über die verbleibenden sechs radialen Bohrungen 38, A strömt das Reaktionsprodukt in die peripheren Bohrungen 36, A und wird über diese aus der Walze abgeführt.

Figur 3 zeigt eine Draufsicht eines Teils der beheizbaren Walze 10 gemäß Figur 3, in der die nahe der Walzenoberfläche vorgesehenen Kanäle 40 zu erkennen sind, denen das Heizgas von den peripheren Bohrungen 36, E (vgl. Figur 2) zugeführt wird.

Das Gemisch aus Brenngas und Luft kann der Walze 10 über wenigstens eine Dreheinführung zugeführt werden.

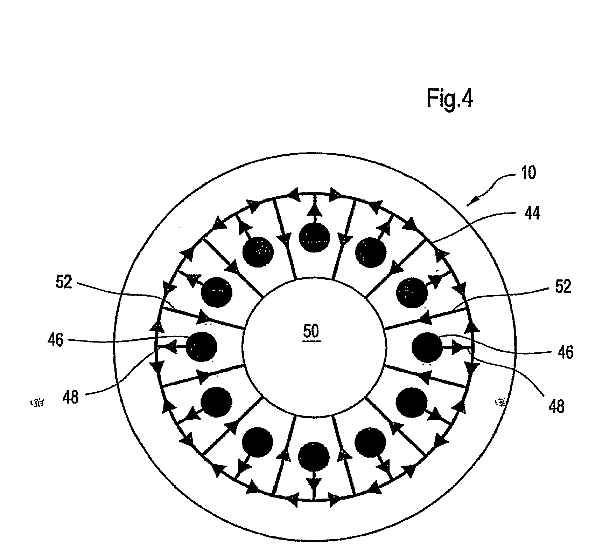

Figur 4 zeigt in schematischer Querschnittsdarstellung eine weitere Ausführungsform der beheizbaren Walze 10, bei der die exotherme Reaktion in einem von Kanälen durchzogenen Ringbereich 44 nahe der Walzenoberfläche erfolgt.

Diesem mit Kanälen durchzogenen Ringbereich 44 nahe der Walzenoberfläche wird über periphere, allgemein zur Walzenachse parallele Bohrungen 46 der Walze 10 sowie von diesen ausgehende radiale Kanäle 48 wieder ein Gemisch aus Brenngas und Luft zugeführt. Die Reaktionsprodukte (Abgase) werden über radiale Kanäle 52 und die zentrale Walzenbohrung 50 aus der Walze abgeführt.

Auch im vorliegenden Fall kann das Gemisch aus Brenngas und Luft der Walze 10 beispielsweise wieder über wenigstens eine Dreheinführung zugeführt werden.

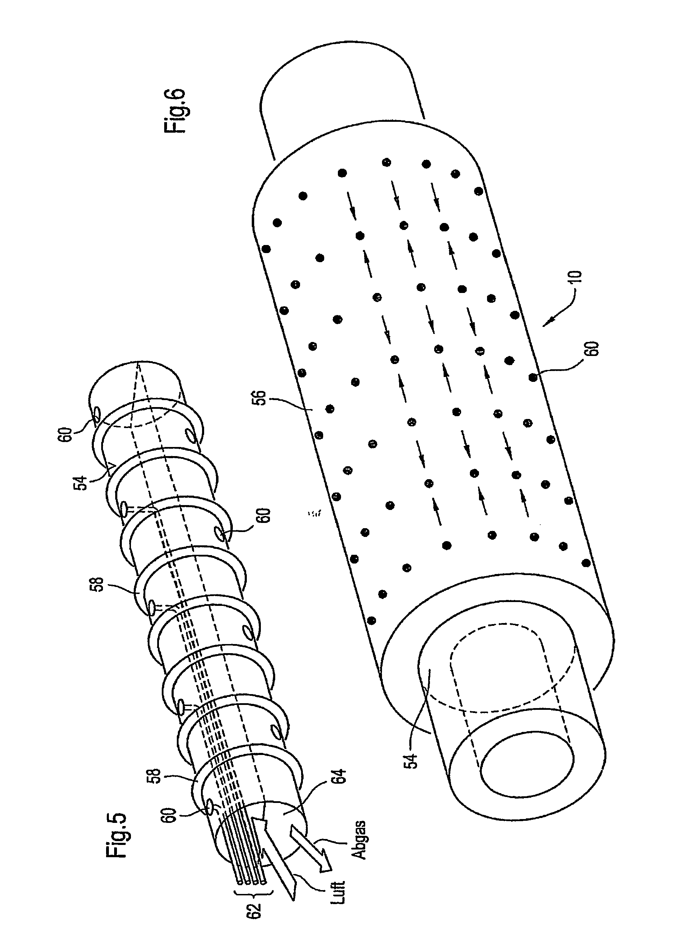

Figur 5 zeigt in einer schematischen perspektivischen Darstellung den drehfesten Kern 54 einer weiteren Ausführungsform der beheizbaren Walze 10 (vgl. insbesondere Figur 6), bei der die exotherme Reaktion beispielsweise im Bereich der Oberfläche des Walzenkerns 54 erfolgt. Eine solche Ausführung ist insbesondere dann von Vorteil, wenn die Walze 10 in Richtung der Walzenachse betrachtet zonenweise beheizbar sein soll, d.h. die verschiedenen Zonen zumindest teilweise unabhängig voneinander beheizbar sein sollen.

In Figur 6 ist in schematischer perspektivischer Darstellung eine mit einem solchen Kern 54 gemäß Figur 5 versehene beheizbare Walze 10 einschließlich des um diesen Kern 54 umlaufenden Mantels 56 gezeigt.

Im vorliegenden Fall ist also beispielsweise die Oberfläche des Walzenkerns 54 zumindest teilweise mit einem Katalysator beschichtet.

Wie anhand der Figur 5 zu erkennen ist, ist die Walze 10 im vorliegenden Fall über Dichtungen 58 und mehrere in die Kanalstrukturen mündende Zuführkanäle oder Bohrungen 60 für Brenngas und Luft bzw. ein Gemisch aus Brenngas und Luft in verschiedene, zumindest teilweise unabhängig voneinander beheizbare axiale Zonen unterteilt. In die Zuführkanäle bzw. Bohrungen 60 münden im vorliegenden Fall Leitungen 62 für das Brenngas. Überdies kommunizieren die Zuführkanäle oder Bohrungen 60 mit einer Luft führenden zentralen Bohrung 64 des Walzenkerns 54, über die auch das entstehende Abgas abgeführt wird.

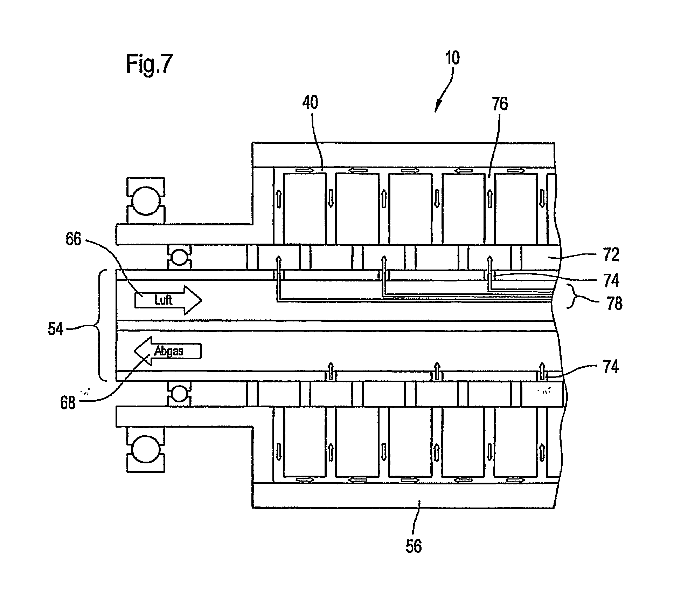

Während bei der soeben beschriebenen Ausführungsform die exotherme Reaktion im Bereich der Oberfläche des Walzenkerns stattfindet, zeigt Figur 7 in schematischer geschnittener Teildarstellung eine weitere Ausführungsform der beheizbaren Walze 10, bei der die Reaktion wieder in einem von Kanälen 40 durchzogenen Ringbereich des drehbaren Walzenmantels 56 erfolgt. Die Walze 10 ist wieder zonenweise beheizbar.

Der drehfeste Walzenkern 54 ist in der Mitte geteilt. Durch die Zweiteilung ergibt sich eine Luftzuführung 66 und eine Abgasabführung 68.

Zwischen dem stehenden Walzenkern 54 und dem drehbaren Walzenmantel 56 sind Dichtungen 70 vorgesehen, die ringförmige Bereiche 72 zwischen den beiden Körpern einschließen. Über im Walzenkern 54 vorgesehene radiale Bohrungen 74 werden jeweils abwechselnd Verbindungen zwischen der Luftzuführung 66 bzw. der Abgasabführung 68 und den ringförmigen Bereichen 72 hergestellt. Radiale Bohrungen 76 im Walzenmantel 56 verbinden die katalytisch beschichteten Kanäle 40 mit den ringförmigen Bereichen 72.

Die Zuführung von Brenngas erfolgt über Zuleitungen 78.

Die Reaktionszonen ergeben sich im vorliegenden Fall also in den katalytisch beschichteten Kanälen 40.

### Bezugszeichenliste

- 10: beheizbare Walze
- 12: mit einem Katalysator beschichtete Wärmeübergangsflächen
- 14: Luftgebläse
- 16: Leitungsabschnitt
- 18: Mischstelle
- 20: Leitungsabschnitt
- 22: Leitungsabschnitt
- 24: Wärmeübertrager
- 26: Leitungsabschnitt
- 28: Stellventil
- 30: Einrichtung zur Volumenstrommessung
- 32: Brenngassensor
- 34: Leitungsabschnitt
- 36: periphere Bohrung
- 38: radialer Kanal
- 40: Kanäle
- 42: von Kanälen durchzogener Ringbereich
- 43: Verteilerkanal
- 44: von Kanälen durchzogener Ringbereich
- 46: periphere Bohrung
- 48: radialer Kanal
- 50: zentrale Walzenbohrung
- 52: radialer Kanal
- 54: Walzenkern
- 56: Walzenmantel
- 58: Dichtung
- 60: Zuführkanal, Zuführöffnung
- 62: Leitung
- 64: zentrale Bohrung
- 66: Luftzuführung
- 68: Abgasabführung
- 70: Dichtung
- 72: ringförmiger Bereich
- 74: radiale Bohrung
- 76: radiale Bohrung
- 78: Brenngas-Zuleitung

## Patentansprüche

1. Verfahren zur Beheizung einer der Herstellung und/oder Veredelung einer Materialbahn, insbesondere Papier- oder Kartonbahn, dienenden Walze (10), wobei
die zum Beheizen der Walze (10) erforderliche Wärme zumindest teilweise in der Walze (10) erzeugt wird, indem in der Walze (10) zumindest bereichsweise für eine katalytische Verbrennung eines Brennstoffes mit Luft bzw. Sauerstoff gesorgt wird.

2. Verfahren nach Anspruch 1,
**dadurch gekennzeichnet,**
**dass** die Walze (10) nach Art eines katalytischen Brenners betrieben wird.

3. Verfahren nach Anspruch 1 oder 2,
**dadurch gekennzeichnet,**
**dass** die Wärme zumindest teilweise an mit einem Katalysator beschichteten inneren Wärmeübertragungsflächen (12) der Walze (10) erzeugt wird.

4. Verfahren nach einem der vorhergehenden Ansprüche,
**dadurch gekennzeichnet,**
**dass** die Wärme zumindest teilweise in wenigstens einem mit einem Katalysatorträger ausgefüllten oder mit einer katalytischen Fläche versehenen inneren Raum der Walze (10) erzeugt wird.

5. Verfahren nach einem der vorhergehenden Ansprüche,
**dadurch gekennzeichnet,**
**dass** als Brennstoff ein Brenngas verwendet wird.

6. Verfahren nach Anspruch 5,
**dadurch gekennzeichnet,**
**dass** an dem Katalysator für eine exotherme Reaktion mit einem unter einem einstellbaren bzw. eingestellten Mischungsverhältnis zugeführten Gemisch aus Brenngas und Luft gesorgt wird.

7. Verfahren nach Anspruch 6,
**dadurch gekennzeichnet,**
**dass** das Gemisch aus Brenngas und Luft peripheren Bohrungen (36) der Walze (10) zugeführt und in diesen peripheren Bohrungen (36) für eine exotherme Reaktion gesorgt wird.

8. Verfahren nach Anspruch 7,
**dadurch gekennzeichnet,**
**dass** das Gemisch aus Brenngas und Luft von den peripheren Bohrungen (36) über radiale Kanäle (38) einem von Kanälen (40) durchzogenen Ringbereich (42) nahe der Walzenoberfläche zugeführt wird.

9. Verfahren nach einem der vorhergehenden Ansprüche 6 bis 8,
**dadurch gekennzeichnet,**
**dass** das Gemisch aus Brenngas und Luft der Walze (10) über wenigstens eine Dreheinführung zugeführt wird.

10. Verfahren nach einem der Ansprüche 1 bis 6,
**dadurch gekennzeichnet,**
**dass** die exotherme Reaktion in einem von Kanälen durchzogenen Ringbereich (44) nahe der Walzenoberfläche erfolgt, dem vorzugsweise über periphere Bohrungen (46) der Walze (10) sowie von diesen ausgehende radiale Kanäle (48) Brenngas und vorzugsweise über eine zentrale Walzenbohrung (50) sowie von dieser ausgehende radiale Kanäle (52) Luft zugeführt wird.

11. Verfahren nach Anspruch 10,
**dadurch gekennzeichnet,**
**dass** das Brenngas bzw. die Luft der Walze (10) über wenigstens eine Dreheinführung zugeführt wird.

12. Verfahren nach einem der vorhergehenden Ansprüche,
**dadurch gekennzeichnet,**
**dass** die Walze (10) in Richtung der Walzenachse betrachtet zonenweise beheizbar ist, wobei die verschiedenen Zonen zumindest teilweise unabhängig voneinander beheizbar sind.

13. Verfahren nach einem der vorhergehenden Ansprüche,
**dadurch gekennzeichnet,**
**dass** bei einer Walze (10) mit einem um einen drehfesten Kern (54) umlaufenden Mantel (56) für eine exotherme Reaktion im Bereich der Oberfläche des Walzenkerns (54) oder in einem von Kanälen durchzogenen Ringbereich des drehbaren Walzenmantels (56) gesorgt wird.

14. Verfahren nach Anspruch 13,
**dadurch gekennzeichnet,**
**dass** im Bereich von auf der Oberfläche des Walzenkerns (54) vorgesehenen Kanalstrukturen für eine exotherme Reaktion gesorgt wird.

15. Verfahren nach Anspruch 13 oder 14,
**dadurch gekennzeichnet,**
**dass** die Oberfläche des Walzenkerns (54) bzw. die darauf vorgesehenen Kanalstrukturen zumindest teilweise mit einem Katalysator beschichtet sind.

16. Verfahren nach einem der Ansprüche 13 bis 15,
**dadurch gekennzeichnet,**
**dass** die Walze (10) über Dichtungen (58) und mehrere in die Kanalstrukturen mündende Zuführkanäle oder Bohrungen (60) für Brenngas und Luft bzw. ein Gemisch aus Brenngas und Luft in verschiedene, zumindest teilweise unabhängig voneinander beheizbare axiale Zonen unterteilt wird.

17. Verfahren nach einem der vorhergehenden Ansprüche,
**dadurch gekennzeichnet,**
**dass** die Reaktions- bzw. Walzentemperatur über das stöchiometrische Massenstromverhältnis Brennstoff/Luft eingestellt wird.

18. Verfahren nach einem der vorhergehenden Ansprüche,
**dadurch gekennzeichnet,**
**dass** für eine überstöchiometrische Verbrennung bzw. für eine Verbrennung mit einem Überschuss an Sauerstoff gesorgt wird.

19. Verfahren nach einem der vorhergehenden Ansprüche,
**dadurch gekennzeichnet,**
**dass** als Brennstoff Wasserstoff verwendet wird.

20. Verfahren nach einem der vorhergehenden Ansprüche,
**dadurch gekennzeichnet,**
**dass** als Brennstoff Reformat bzw. ein aus Erdgas gewonnenes H₂-reiches Gas verwendet wird.

21. Verfahren nach einem der vorhergehenden Ansprüche,
**dadurch gekennzeichnet,**
**dass** als Katalysator wenigstens ein Edelmetall wie insbesondere Platin, Palladium, Rhodium und/oder dergleichen verwendet wird.

22. Verfahren nach einem der vorhergehenden Ansprüche,
**dadurch gekennzeichnet,**
**dass** vorzugsweise über eine Volumenstrommessung (30) und ein entsprechendes Stellventil (28) der Brenngasmassenstrom geregelt wird.

23. Verfahren nach einem der vorhergehenden Ansprüche,
**dadurch gekennzeichnet,**
**dass** vorzugsweise über einen Brenngassensor (32) und ein entsprechendes Stellventil (28) die Brenngaskonzentration in der Luft geregelt wird.

24. Verfahren nach einem der vorhergehenden Ansprüche,
**dadurch gekennzeichnet,**
**dass** vorzugsweise über eine Messung der Walzentemperatur und ein entsprechendes Stellventil die Walzentemperatur geregelt wird.

25. Verfahren nach einem der Ansprüche 22 bis 24,
**dadurch gekennzeichnet,**
**dass** die jeweilige Regelung zumindest teilweise zonenweise erfolgt.

26. Beheizbare Walze (10) zur Herstellung und/oder Veredelung einer Materialbahn, insbesondere Papier- oder Kartonbahn,
**dadurch gekennzeichnet,**
**dass** die zum Beheizen erforderliche Wärme zumindest teilweise durch katalytische Verbrennung eines Brennstoffes mit Luft bzw. Sauerstoff in der Walze (10) erzeugt ist.

27. Walze nach Anspruch 26,
**dadurch gekennzeichnet,**
**dass** sie gleichzeitig nach Art eines katalytischen Brenners ausgeführt ist.

28. Walze nach Anspruch 26 oder 27,
**dadurch gekennzeichnet,**
**dass** sie mit einem Katalysator beschichtete innere Wärmeübertragungsflächen (12) aufweist.

29. Walze nach einem der vorhergehenden Ansprüche 26 bis 28,
**dadurch gekennzeichnet,**
**dass** sie wenigstens einen mit einem Katalysatorträger ausgefüllten oder mit einer katalytischen Fläche versehenen inneren Raum aufweist.

30. Walze nach einem der vorhergehenden Ansprüche 26 bis 29,
**dadurch gekennzeichnet,**
**dass** als Brennstoff ein Brenngas vorgesehen ist.

31. Walze nach Anspruch 30,
**dadurch gekennzeichnet,**
**dass** ihr für eine exotherme Reaktion an dem Katalysator ein Gemisch aus Brenngas und Luft zuführbar ist, dessen Mischungsverhältnis vorzugsweise einstellbar ist.

32. Walze nach Anspruch 31,
**dadurch gekennzeichnet,**
**dass** das Gemisch aus Brenngas und Luft peripheren Bohrungen (36) der Walze (10) zugeführt ist und die exotherme Reaktion in diesen peripheren Bohrungen (36) erfolgt.

33. Walze nach Anspruch 32,
**dadurch gekennzeichnet,**
**dass** das Gemisch aus Brenngas und luft von den peripheren Bohrungen (36) über radiale Kanäle (38) einem von Kanälen (40) durchzogenen Ringbereich (42) nahe der Walzenoberfläche zugeführt ist.

34. Walze nach einem der vorhergehenden Ansprüche 31 bis 33,
**dadurch gekennzeichnet,**
**dass** das Gemisch aus Brenngas und Luft der Walze (10) über wenigstens eine Dreheinführung zugeführt ist.

35. Walze nach einem der Ansprüche 26 bis 31,
**dadurch gekennzeichnet,**
**dass** die exotherme Reaktion in einem von Kanälen durchzogenen Ringbereich (44) nahe der Walzenoberfläche erfolgt, dem vorzugsweise über periphere Bohrungen (46) der Walze (10) sowie von diesen ausgehende radiale Kanäle (48) Brenngas und vorzugsweise über eine zentrale Walzenbohrung (50) sowie von dieser ausgehende radiale Kanäle (52) Luft zuführbar ist.

36. Walze nach Anspruch 35,
**dadurch gekennzeichnet,**
**dass** das Brenngas bzw. die Luft der Walze (10) über wenigstens eine Dreheinführung zuführbar ist.

37. Walze nach einem der vorhergehenden Ansprüche 26 bis 36,
**dadurch gekennzeichnet,**
**dass** die Walze (10) in Richtung der Walzenachse betrachtet zonenweise beheizbar ist, wobei die verschiedenen Zonen zumindest teilweise unabhängig voneinander beheizbar sind.

38. Walze nach einem der vorhergehenden Ansprüche 26 bis 37
**dadurch gekennzeichnet,**
**dass** sie einen drehfesten Kern (54) sowie einen um diesen umlaufenden Mantel (56) umfasst und die exotherme Reaktion im Bereich der Oberfläche des Walzenkerns (54) oder in einem von Kanälen durchzogenen Ringbereich des drehbaren Walzenmantels (56) erfolgt.

39. Walze nach Anspruch 38,
**dadurch gekennzeichnet,**
**dass** die exotherme Reaktion im Bereich von auf der Oberfläche des Walzenkerns (54) vorgesehenen Kanalstrukturen erfolgt.

40. Walze nach Anspruch 38 oder 39,
**dadurch gekennzeichnet,**
**dass** die Oberfläche des Walzenkerns (54) bzw. die darauf vorgesehenen Kanalstrukturen zumindest teilweise mit einem Katalysator beschichtet sind.

41. Walze nach einem der Ansprüche 38 bis 40,
**dadurch gekennzeichnet,**
**dass** sie über Dichtungen (58) und mehrere in die Kanalstrukturen mündende Zuführkanäle oder Bohrungen (60) für Brenngas und Luft bzw. ein Gemisch aus Brenngas und Luft in verschiedene, zumindest teilweise unabhängig voneinander beheizbare axiale Zonen unterteilt ist.

42. Walze nach einem der vorhergehenden Ansprüche 26 bis 41,
**dadurch gekennzeichnet,**
**dass** die Reaktions- bzw. Walzentemperatur über das stöchiometrische Massenstromverhältnis Brennstoff/Luft einstellbar ist.

43. Walze nach einem der vorhergehenden Ansprüche 26 bis 42,
**dadurch gekennzeichnet,**
**dass** eine überstöchiometrische Verbrennung bzw. eine Verbrennung mit einem Überschuss an Sauerstoff erfolgt.

44. Walze nach einem der vorhergehenden Ansprüche 26 bis 43,
**dadurch gekennzeichnet,**
**dass** als Brennstoff Wasserstoff vorgesehen ist.

45. Walze nach einem der vorhergehenden Ansprüche 26 bis 44,
**dadurch gekennzeichnet,**
**dass** als Brennstoff Reformat bzw. ein aus Erdgas gewonnenes H₂-reiches Gas vorgesehen ist.

46. Walze nach einem der vorhergehenden Ansprüche 26 bis 45,
**dadurch gekennzeichnet,**
**dass** als Katalysator wenigstens ein Edelmetall wie insbesondere Platin, Palladium, Rhodium und/oder dergleichen vorgesehen ist.

47. Walze nach einem der vorhergehenden Ansprüche 26 bis 46
**dadurch gekennzeichnet,**
**dass** der Brenngasmassenstrom regelbar ist, wozu vorzugsweise eine Volumenstrommesseinrichtung (30) und ein entsprechendes Stellventil (28) vorgesehen sind.

48. Walze nach einem der vorhergehenden Ansprüche 26 bis 47,
**dadurch gekennzeichnet,**
**dass** die Brenngaskonzentration in der Luft regelbar ist, wozu vorzugsweise ein Brenngassensor (32) und ein entsprechendes Stellventil (28) vorgesehen sind.

49. Walze nach einem der vorhergehenden Ansprüche 26 bis 48,
**dadurch gekennzeichnet,**
**dass** die Walzentemperatur regelbar ist, wozu vorzugsweise eine Einrichtung zur Messung der Walzentemperatur und ein entsprechendes Stellventil vorgesehen sind.

50. Walze nach einem der Ansprüche 47 bis 49,
**dadurch gekennzeichnet,**
**dass** die jeweilige Regelung zumindest teilweise zonenweise erfolgt.

51. Walze nach einem der vorhergehenden Ansprüche 38 bis 41,
**dadurch gekennzeichnet,**
**dass** die auf der Oberfläche des Walzenkerns (54) vorgesehenen Kanalstrukturen zumindest teilweise durch Ätzen erzeugt sind.

52. Walze nach einem der vorhergehenden Ansprüche 38 bis 41,
**dadurch gekennzeichnet,**
**dass** die auf der Oberfläche des Walzenkerns (54) vorgesehenen Kanalstrukturen zumindest teilweise durch Fräsen erzeugt sind.

53. Walze nach einem der vorhergehenden Ansprüche 28 oder 40,
**dadurch gekennzeichnet,**
**dass** die Beschichtung mit dem Katalysator durch eine Spül-, Tauch- oder Sprühbeschichtung erzeugt ist.

54. Walze nach einem der vorhergehenden Ansprüche 38 bis 41,
**dadurch gekennzeichnet,**
**dass** der Walzenmantel (56) auf den Walzenkern (54) aufgeschrumpft und/oder mit diesem verlötet ist.

## Claims

1. Method for heating a roll (10) which serves to produce and/or convert a material web, in particular a paper or paperboard web, the heat which is required for heating the roll (10) being generated at least partially in the roll (10) by a catalytic combustion of a fuel with air or oxygen being ensured in the roll (10) at least in regions.

2. Method according to Claim 1, **characterized in that** the roll (10) is operated in the manner of a catalytic burner.

3. Method according to Claim 1 or 2, **characterized in that** the heat is generated at least partially on inner heat transfer surfaces (12) of the roll (10) which are coated with a catalyst.

4. Method according to one of the preceding claims, **characterized in that** the heat is generated at least partially in at least one inner space of the roll (10) which is filled with a catalyst carrier or is provided with a catalytic surface.

5. Method according to one of the preceding claims, **characterized in that** a combustion gas is used as fuel.

6. Method according to Claim 5, **characterized in that** an exothermic reaction is ensured on the catalyst with a mixture of combustion gas and air which is supplied at a mixing ratio which can be set or is set.

7. Method according to Claim 6, **characterized in that** the mixture of combustion gas and air is fed to peripheral holes (36) of the roll (10) and an exothermic reaction is ensured in the said peripheral holes (36).

8. Method according to Claim 7, **characterized in that** the mixture of combustion gas and air is fed from the peripheral holes (36) via radial channels (38) to an annular region (42) which is penetrated by channels (40), near the roll surface.

9. Method according to one of preceding Claims 6 to 8, **characterized in that** the mixture of combustion gas and air is supplied to the roll (10) via at least one rotary inlet.

10. Method according to one of Claims 1 to 6,
**characterized in that** the exothermic reaction takes place in an annular region (44) which is penetrated by channels close to the roll surface, which annular region (44) is preferably supplied with combustion gas via peripheral holes (46) of the roll (10) and radial channels (48) which emanate from the former, and is preferably supplied with air via a central roll hole (50) and radial channels (52) which emanate from the former.

11. Method according to Claim 10, **characterized in that** the combustion gas or the air is supplied to the roll (10) via at least one rotary inlet.

12. Method according to one of the preceding claims, **characterized in that** the roll (10) can be heated in zones, as viewed in the direction of the roll axis, it being possible for the different zones to be heated at least partially independently of one another.

13. Method according to one of the preceding claims, **characterized in that**, in the case of a roll (10) having a cover (56) which circulates about a rotationally fixed core (54), an exothermic reaction is ensured in the region of the surface of the roll core (54) or in an annular region of the rotatable roll cover (56), which annular region is penetrated by channels.

14. Method according to Claim 13, **characterized in that** an exothermic reaction is ensured in the region of channel structures which are provided on the surface of the roll core (54).

15. Method according to Claim 13 or 14, **characterized in that** the surface of the roll core (54) or the channel structures which are provided on the former is/are coated at least partially with a catalyst.

16. Method according to one of Claims 13 to 15, **characterized in that** the roll (10) is divided into different axial zones which can be heated at least partially independently of one another via seals (58) and a plurality of supply channels or holes (60) for combustion gas and air or a mixture of combustion gas and air, which supply channels or holes (60) open into the channel structures.

17. Method according to one of the preceding claims, **characterized in that** the reaction or roll temperature is set via the stoichiometric mass flow ratio of fuel/air.

18. Method according to one of the preceding claims, **characterized in that** a combustion which is leaner than stoichiometric or a combustion with an excess of oxygen is ensured.

19. Method according to one of the preceding claims, **characterized in that** hydrogen is used as fuel.

20. Method according to one of the preceding claims, **characterized in that** reformate or an H₂-rich gas which is obtained from natural gas is used as fuel.

21. Method according to one of the preceding claims, **characterized in that** at least one precious metal such as, in particular, platinum, palladium, rhodium and/or the like is used as catalyst.

22. Method according to one of the preceding claims, **characterized in that** the combustion-gas mass flow is preferably regulated via a volumetric flow measurement (30) and a corresponding actuator valve (28).

23. Method according to one of the preceding claims, **characterized in that** the combustion-gas concentration in the air is preferably regulated via a combustion-gas sensor (32) and a corresponding actuator valve (28).

24. Method according to one of the preceding claims, **characterized in that** the roll temperature is preferably regulated via a measurement of the roll temperature and a corresponding actuator valve.

25. Method according to one of Claims 22 to 24, **characterized in that** the respective regulation takes place at least partially in zones.

26. Heatable roll (10) for producing and/or converting a material web, in particular a paper or paperboard web, **characterized in that** the heat which is required for heating is generated at least partially by catalytic combustion of a fuel with air or oxygen in the roll (10).

27. Roll according to Claim 26, **characterized in that** it is configured at the same time in the manner of a catalytic burner.

28. Roll according to Claim 26 or 27, **characterized in that** it has inner heat transfer surfaces (12) which are coated with a catalyst.

29. Roll according to one of preceding Claims 26 to 28, **characterized in that** it has at least one inner space which is filled with a catalyst carrier or is provided with a catalytic surface.

30. Roll according to one of preceding Claims 26 to 29, **characterized in that** a combustion gas is provided as fuel.

31. Roll according to Claim 30, **characterized in that** it can be supplied with a mixture of combustion gas and air, the mixing ratio of which can preferably be set, for an exothermic reaction on the catalyst.

32. Roll according to Claim 31, **characterized in that** the mixture of combustion gas and air is fed to peripheral holes (36) of the roll (10) and the exothermic reaction takes place in the said peripheral holes (36).

33. Roll according to Claim 32, **characterized in that** the mixture of combustion gas and air is fed from the peripheral holes (36) via radial channels (38) to an annular region (42) which is penetrated by channels (40), near the roll surface.

34. Roll according to one of preceding Claims 31 to 33, **characterized in that** the mixture of combustion gas and air is supplied to the roll (10) via at least one rotary inlet.

35. Roll according to one of Claims 26 to 31, **characterized in that** the exothermic reaction takes place in an annular region (44) which is penetrated by channels close to the roll surface, which annular region (44) can preferably be supplied with combustion gas via peripheral holes (46) of the roll (10) and radial channels (48) which emanate from the former, and can preferably be supplied with air via a central roll hole (50) and radial channels (52) which emanate from the former.

36. Roll according to Claim 35, **characterized in that** the combustion gas or the air can be supplied to the roll (10) via at least one rotary inlet.

37. Roll according to one of preceding Claims 26 to 36, **characterized in that** the roll (10) can be heated in zones, as viewed in the direction of the roll axis, it being possible for the different zones to be heated at least partially independently of one another.

38. Roll according to one of preceding Claims 26 to 37, **characterized in that** it comprises a rotationally fixed core (54) and a cover (56) which circulates about the former, and the exothermic reaction takes place in the region of the surface of the roll core (54) or in an annular region of the rotatable roll cover (56), which annular region is penetrated by channels.

39. Roll according to Claim 38, **characterized in that** the exothermic reaction takes place in the region of channel structures which are provided on the surface of the roll core (54).

40. Roll according to Claim 38 or 39, **characterized in that** the surface of the roll core (54) or the channel structures which are provided on the former is/are coated at least partially with a catalyst.

41. Roll according to one of Claims 38 to 40, **characterized in that** it is divided into different axial zones which can be heated at least partially independently of one another via seals (58) and a plurality of supply channels or holes (60) for combustion gas and air or a mixture of combustion gas and air, which supply channels or holes (60) open into the channel structures.

42. Roll according to one of preceding Claims 26 to 41, **characterized in that** the reaction or roll temperature can be set via the stoichiometric mass flow ratio of fuel/air.

43. Roll according to one of preceding Claims 26 to 42, **characterized in that** a combustion which is leaner than stoichiometric or a combustion with an excess of oxygen takes place.

44. Roll according to one of preceding Claims 26 to 43, **characterized in that** hydrogen is provided as fuel.

45. Roll according to one of preceding Claims 26 to 44, **characterized in that** reformate or an H₂-rich gas which is obtained from natural gas is provided as fuel.

46. Roll according to one of preceding Claims 26 to 45, **characterized in that** at least one precious metal such as, in particular, platinum, palladium, rhodium and/or the like is provided as catalyst.

47. Roll according to one of preceding Claims 26 to 46, **characterized in that** the combustion-gas mass flow can be regulated, a volumetric flow measuring device (30) and a corresponding actuator valve (28) preferably being provided.

48. Roll according to one of preceding Claims 26 to 47, **characterized in that** the combustion-gas concentration in the air can be regulated, a combustion-gas sensor (32) and a corresponding actuator valve (28) preferably being provided.

49. Roll according to one of preceding Claims 26 to 48, **characterized in that** the roll temperature can be regulated, a device for measuring the roll temperature and a corresponding actuator valve preferably being provided.

50. Roll according to one of Claims 47 to 49, **characterized in that** the respective regulation takes place at least partially in zones.

51. Roll according to one of preceding Claims 38 to 41, **characterized in that** the channel structures which are provided on the surface of the roll core (54) are produced at least partially by etching.

52. Roll according to one of preceding Claims 38 to 41, **characterized in that** the channel structures which are provided on the surface of the roll core (54) are produced at least partially by milling.

53. Roll according to one of preceding Claims 28 or 40, **characterized in that** the coating with the catalyst is produced by a sweep, dip or spray coating.

54. Roll according to one of preceding Claims 38 to 41, **characterized in that** the roll cover (56) is shrunk onto the roll core (54) and/or is soldered to the latter.

## Revendications

1. Procédé pour chauffer un rouleau (10) servant à la fabrication et/ou à l'amélioration d'une bande de matériau, notamment d'une bande de papier ou de carton, dans lequel
la chaleur requise pour chauffer le rouleau (10) est produite au moins en partie dans le rouleau (10), en ce qu'au moins en partie, on réalise dans le rouleau (10) une combustion catalytique d'un combustible avec de l'air ou de l'oxygène.

2. Procédé selon la revendication 1,
**caractérisé en ce que**
le rouleau (10) fonctionne à la manière d'un brûleur catalytique.

3. Procédé selon la revendication 1 ou 2,
**caractérisé en ce que**
la chaleur est produite au moins en partie au niveau de surfaces de transfert thermique internes (12) du rouleau (10), revêtues d'un catalyseur.

4. Procédé selon l'une quelconque des revendications précédentes,
**caractérisé en ce que**
la chaleur est produite au moins en partie dans au moins un espace interne du rouleau (10) rempli d'un support de catalyseur ou pourvu d'une surface catalytique.

5. Procédé selon l'une quelconque des revendications précédentes,
**caractérisé en ce que**
l'on utilise un gaz comburant comme combustible.

6. Procédé selon la revendication 5,
**caractérisé en ce que**
l'on réalise au niveau du catalyseur, une réaction exothermique avec un mélange de gaz comburant et d'air acheminé avec un rapport de mélange ajusté ou pouvant être ajusté.

7. Procédé selon la revendication 6,
**caractérisé en ce que**
le mélange de gaz comburant et d'air est acheminé à des alésages périphériques (36) du rouleau (10) et que l'on réalise dans ces alésages périphériques (36) une réaction exothermique.

8. Procédé selon la revendication 7,
**caractérisé en ce que**
le mélange de gaz comburant et d'air est acheminé depuis les alésages périphériques (36) par le biais de canaux radiaux (38) à une région annulaire (42) traversée par des canaux (40), proche de la surface du rouleau.

9. Procédé selon l'une quelconque des revendications précédentes 6 à 8,
**caractérisé en ce que**
le mélange de gaz comburant et d'air est acheminé au rouleau (10) par le biais d'au moins un système d'entrée rotatif.

10. Procédé selon l'une quelconque des revendications 1 à 6,
**caractérisé en ce que**
la réaction exothermique s'effectue dans une région annulaire (44) proche de la surface du rouleau et traversée par des canaux, à laquelle du gaz comburant est acheminé de préférence par le biais d'alésages périphériques (46) du rouleau (10) ainsi que de canaux radiaux (48) partant de ceux-ci, et de l'air est acheminé de préférence par le biais d'un alésage de rouleau central (50) ainsi que de canaux radiaux (52) partant de celui-ci.

11. Procédé selon la revendication 10,
**caractérisé en ce que**
le gaz comburant ou l'air est acheminé au rouleau (10) par le biais d'au moins un système d'entrée rotatif.

12. Procédé selon l'une quelconque des revendications précédentes,
**caractérisé en ce que**
le rouleau (10) peut être chauffé par zones, vu dans la direction de l'axe du rouleau, les différentes zones pouvant être chauffées au moins en partie indépendamment les unes des autres.

13. Procédé selon l'une quelconque des revendications précédentes,
**caractérisé en ce que**
dans le cas d'un rouleau (10) avec une enveloppe périphérique (56) tournant autour d'un noyau fixe (54), on réalise une réaction exothermique dans la région de la surface du noyau du rouleau (54) ou dans une région annulaire traversée par des canaux de l'enveloppe de rouleau rotative (56).

14. Procédé selon la revendication 13,
**caractérisé en ce que**
l'on réalise une réaction exothermique dans la région de structures de canaux prévues sur la surface du noyau du rouleau (54).

15. Procédé selon la revendication 13 ou 14,
**caractérisé en ce que**
la surface du noyau du rouleau (54) ou les structures de canaux disposées sur celle-ci sont au moins en partie revêtues d'un catalyseur.

16. Procédé selon l'une quelconque des revendications 13 à 15,
**caractérisé en ce que**
le rouleau (10) est divisé, par le biais de joints d'étanchéité (58) et de plusieurs canaux d'alimentation ou d'alésages (60) débouchant dans les structures de canaux, pour le gaz comburant et l'air ou pour un mélange de gaz comburant et d'air, en plusieurs zones axiales pouvant être chauffées au moins en partie indépendamment les unes des autres.

17. Procédé selon l'une quelconque des revendications précédentes,
**caractérisé en ce que**
la température de réaction ou la température du rouleau est ajustée par le biais du rapport stoechiométrique de débit massique de combustible et d'air.

18. Procédé selon l'une quelconque des revendications précédentes,
**caractérisé en ce que**
l'on réalise une combustion sur-stoechiométrique ou une combustion avec un excès d'oxygène.

19. Procédé selon l'une quelconque des revendications précédentes,
**caractérisé en ce que**
l'on utilise comme combustible de l'hydrogène.

20. Procédé selon l'une quelconque des revendications précédentes,
**caractérisé en ce que**
l'on utilise comme combustible du réformat ou un gaz riche en H₂ obtenu à partir de gaz naturel.

21. Procédé selon l'une quelconque des revendications précédentes,
**caractérisé en ce que**
l'on utilise comme catalyseur au moins un métal noble comme notamment le platine, le palladium, le rhodium et/ou similaires.

22. Procédé selon l'une quelconque des revendications précédentes,
**caractérisé en ce que**
l'on régule le débit massique de gaz comburant de préférence par le biais d'une mesure du débit volumique (30) et d'une soupape de commande correspondante (28) .

23. Procédé selon l'une quelconque des revendications précédentes,
**caractérisé en ce que**
l'on régule la concentration en gaz comburant dans l'air de préférence par le biais d'un capteur de gaz comburant (32) et d'une soupape de commande correspondante (28).

24. Procédé selon l'une quelconque des revendications précédentes,
**caractérisé en ce que**
l'on régule la température du rouleau de préférence par le biais d'une mesure de la température du rouleau et d'une soupape de commande correspondante.

25. Procédé selon l'une quelconque des revendications 22 à 24,
**caractérisé en ce que**
la régulation respective est effectuée au moins en partie par zones.

26. Rouleau chauffable (10) pour la fabrication et/ou l'amélioration d'une bande de matériau, notamment d'une bande de papier ou de carton,
**caractérisé en ce que**
la chaleur requise pour le chauffage est produite au moins en partie par une combustion catalytique d'un combustible avec de l'air ou de l'oxygène dans le rouleau (10).

27. Rouleau selon la revendication 26,
**caractérisé en ce**
**qu'**il est réalisé en même temps comme un brûleur catalytique.

28. Rouleau selon la revendication 26 ou 27,
**caractérisé en ce**
**qu'**il présente des surfaces de transfert thermique internes (12) revêtues d'un catalyseur.

29. Rouleau selon l'une quelconque des revendications précédentes 26 à 28,
**caractérisé en ce**
**qu'**il présente au moins un espace interne rempli d'un support de catalyseur ou pourvu d'une surface catalytique.

30. Rouleau selon l'une quelconque des revendications précédentes 26 à 29,
**caractérisé en ce que**
l'on prévoit un gaz comburant comme combustible.

31. Rouleau selon la revendication 30,
**caractérisé en ce que**
l'on peut lui acheminer, en vue d'une réaction exothermique au niveau du catalyseur, un mélange de gaz comburant et d'air, dont le rapport de mélange peut de préférence être ajusté.

32. Rouleau selon la revendication 31,
**caractérisé en ce que**
le mélange de gaz comburant et d'air est acheminé à des alésages périphériques (36) du rouleau (10) et la réaction exothermique s'effectue dans ces alésages périphériques (36).

33. Rouleau selon la revendication 32,
**caractérisé en ce que**
le mélange de gaz comburant et d'air est acheminé depuis les alésages périphériques (36) par le biais de canaux radiaux (38) à une région annulaire (42) traversée par des canaux (40) proche de la surface du rouleau.

34. Rouleau selon l'une quelconque des revendications précédentes 31 à 33,
**caractérisé en ce que**
le mélange de gaz comburant et d'air est acheminé au rouleau (10) par le biais d'au moins un système d'entrée rotatif.

35. Rouleau selon l'une quelconque des revendications 26 à 31,
**caractérisé en ce que**
la réaction exothermique s'effectue dans une région annulaire (44) proche de la surface du rouleau et traversée par des canaux, à laquelle du gaz comburant peut être acheminé de préférence par le biais d'alésages périphériques (46) du rouleau (10) ainsi que de canaux radiaux (48) sortant de celui-ci, et de l'air peut être acheminé de préférence par le biais d'un alésage de rouleau central (50) ainsi que de canaux radiaux (52) sortant de celui-ci.

36. Rouleau selon la revendication 35,
**caractérisé en ce que**
le gaz comburant ou l'air peut être acheminé au rouleau (10) par le biais d'au moins un système d'entrée rotatif.

37. Rouleau selon l'une quelconque des revendications précédentes 26 à 36,
**caractérisé en ce que**
le rouleau (10) peut être chauffé par zones, vu dans la direction de l'axe du rouleau, les différentes zones pouvant être chauffées au moins en partie indépendamment les unes des autres.

38. Rouleau selon l'une quelconque des revendications précédentes 26 à 37,
**caractérisé en ce**
**qu'**il comprend un noyau fixe (54) ainsi qu'une enveloppe (56) tournant autour de celui-ci, et la réaction exothermique a lieu dans la région de la surface du noyau du rouleau (54) ou dans une région annulaire traversée par des canaux de l'enveloppe du rouleau (56).

39. Rouleau selon la revendication 38,
**caractérisé en ce que**
la réaction exothermique a lieu dans la région de structures de canaux prévues sur la surface du noyau du rouleau (54).

40. Rouleau selon la revendication 38 ou 39,
**caractérisé en ce que**
la surface du noyau du rouleau (54) ou les structures de canaux prévues sur celle-ci sont au moins en partie revêtues d'un catalyseur.

41. Rouleau selon l'une quelconque des revendications 38 à 40,
**caractérisé en ce**
**qu'**il est divisé par le biais de joints d'étanchéité (58) et de plusieurs canaux d'alimentation ou d'alésages (60) débouchant dans les structures de canaux, pour le gaz comburant et l'air ou pour un mélange de gaz comburant et d'air, en plusieurs zones axiales pouvant être chauffées au moins en partie indépendamment les unes des autres.

42. Rouleau selon l'une quelconque des revendications précédentes 26 à 41,
**caractérisé en ce que**
la température de réaction ou la température du rouleau peut être ajustée par le biais du rapport stoechiométrique de débit massique de combustible et d'air.

43. Rouleau selon l'une quelconque des revendications précédentes 26 à 42,
**caractérisé en ce**
**qu'**une combustion sur-stoechiométrique ou une combustion avec un excès d'oxygène a lieu.

44. Rouleau selon l'une quelconque des revendications précédentes 26 à 43,
**caractérisé en ce que**
l'on prévoit de l'hydrogène en tant que combustible.

45. Rouleau selon l'une quelconque des revendications précédentes 26 à 44,
**caractérisé en ce que**
l'on prévoit comme combustible du réformat ou un gaz riche en H₂ obtenu à partir de gaz naturel.

46. Rouleau selon l'une quelconque des revendications précédentes 26 à 45,
**caractérisé en ce que**
l'on prévoit comme catalyseur au moins un métal noble comme notamment le platine, le palladium, le rhodium et/ou similaires.

47. Rouleau selon l'une quelconque des revendications précédentes 26 à 46,
**caractérisé en ce que**
le débit massique de gaz comburant peut être régulé, et l'on prévoit à cet effet de préférence un dispositif de mesure du débit volumique (30) et une soupape de commande correspondante (28).

48. Rouleau selon l'une quelconque des revendications précédentes 26 à 47,
**caractérisé en ce que**
la concentration en gaz comburant dans l'air peut être régulée, et l'on prévoit à cet effet de préférence un capteur de gaz comburant (32) et une soupape de commande correspondante (28).

49. Rouleau selon l'une quelconque des revendications précédentes 26 à 48,
**caractérisé en ce que**
la température du rouleau peut être régulée, et l'on prévoit à cet effet de préférence un dispositif pour la mesure de la température du rouleau et une soupape de commande correspondante.

50. Rouleau selon l'une quelconque des revendications 47 à 49,
**caractérisé en ce que**
la régulation correspondante s'effectue au moins en partie par zones.

51. Rouleau selon l'une quelconque des revendications précédentes 38 à 41,
**caractérisé en ce que**
les structures de canaux prévues sur la surface du noyau du rouleau (54) sont produites au moins en partie par gravage.

52. Rouleau selon l'une quelconque des revendications précédentes 38 à 41,
**caractérisé en ce que**
les structures de canaux prévues sur la surface du noyau du rouleau (54) sont produites au moins en partie par fraisage.

53. Rouleau selon l'une quelconque des revendications précédentes 28 ou 40,
**caractérisé en ce que**
le revêtement avec le catalyseur est produit par un revêtement par balayage, par trempage ou par pulvérisation.

54. Rouleau selon l'une quelconque des revendications précédentes 38 à 41,
**caractérisé en ce que**
l'enveloppe du rouleau (56) est emmanchée à chaud sur le noyau du rouleau (54) et/ou brasée sur celui-ci.
